**Europäisches Patentamt**

**European Patent Office**

**Office européen des brevets**

(11) Veröffentlichungsnummer : **0 514 676 A2**

# (12) EUROPÄISCHE PATENTANMELDUNG

(21) Anmeldenummer : **92106856.5**

(22) Anmeldetag : **22.04.92**

(51) Int. Cl.$^5$ : **B65G 65/00**, B65G 59/02, B65G 57/10

(30) Priorität : **22.04.91 DE 9104891 U**

(43) Veröffentlichungstag der Anmeldung :
**25.11.92 Patentblatt 92/48**

(84) Benannte Vertragsstaaten :
**AT DE DK GB IT NL**

(71) Anmelder : **STUKENBRÖKER MASCHINEN-
UND ANLAGENBAU GmbH
Herwigstrasse 11
W-2850 Bremerhaven (DE)**

(72) Erfinder : **Stukenbröker, Horst
Auerstrasse 56
W-5850 Bremerhaven (DE)**

(74) Vertreter : **Schmidt-Bogatzky, Jürgen, Dr. Ing.
Warburgstrasse 50
W-2000 Hamburg 36 (DE)**

(54) **Vorrichtung zum Be- oder Entladen.**

(57)    Die Erfindung betrifft eine Vorrichtung zum Be- oder Entladen von etagenweise mit Gebinden od. dgl. befüllbaren auf Untergestellen rollbaren mindestens oben offenen Käfigen 11, deren Be- und Entladestation 4 eine Hubeinrichtung aufweist und über eine Pufferstrecke 6 mit einem Förderer verbunden ist. Die Be- und Entladestation 4 weist eine Be- und Entladeeinrichtung 14 mit einer Käfigwagenaufnahmekammer 15 auf, an deren einer Seite eine horizontal in den Käfigen 11 und vertikal mit einer etageseitigen Gebindeanordnung 16 verfahrbare Hubgabel 17 angeordnet ist. An dem oberen Endabschnitt 18 der Be- und Entladeeinrichtung 14 ist in der Ebene der Pufferstrecke 6 ein horizontal über die Käfigwagenaufnahmekammer 15 in Richtung zur Pufferstrecke 6 und zurück verfahrbarer Abschieber 19 angeordnet.

EP 0 514 676 A2

## Fig.1

Die Erfindung betrifft eine Vorrichtung zum Be- oder Entladen von etagenweise mit Gebinden od. dgl. befüllbaren auf Untergestellen rollbaren mindestens oben offenen Käfigen, deren Be- und Entladestation eine Hubeinrichtung aufweist und über eine Pufferstrecke mit einem Förderer verbunden ist.

Es sind Vorrichtungen bekannt, bei denen mit Gebinde befüllte oben und unten offene Autoklavenkäfige auf rollbaren Untergestellen lösbar angeordnet sind und einer Entladestation zugeführt und in diese eingeschoben werden. Danach werden die im Käfig befindlichen Gebinde durch eine Hubeinrichtung wie z. B. eine Hubschere soweit angehoben, daß die Gebinde manuell auf eine Pufferstrecke geschoben werden können. Dieser Vorgang ist sehr personalintensiv und für die betroffenen Personen physisch anstrengend. Darüber hinaus ist der Betrieb derartiger Vorrichtungen durch den Personalaufwand mit hohen Personalkosten belastet.

Die Aufgabe der Erfindung besteht darin, eine Vorrichtung der eingangs genannten Art so zu verbessern, daß sowohl bei einer Beladung wie auch Entladung von Gebinden eine Trennung von Käfig und Untergestell nicht mehr erforderlich ist.

Erfindungsgemäß erfolgt die Lösung der Aufgabe durch die kennzeichnenden Merkmale des Anspruchs 1. Vorteilhafte Ausgestaltungen der Erfindung werden in den abhängigen Ansprüchen beschrieben.

Die Erfindung wird nachstehend am Beispiel der in den Zeichnungen dargestellten Vorrichtungen näher erläutert. Es zeigt

Fig. 1 eine Ausbildung einer Vorrichtung in einer Draufsicht,

Fig. 2 eine weitere Ausbildung einer Vorrichtung in einer Draufsicht,

Fig. 3 die Be- und Entladestation der Vorrichtung nach Fig. 1 in einer schematischen Draufsicht,

Fig. 4 die Be- und Entladeeinrichtung der Be- und Entladestation in einer schematischen Queransicht im Schnitt A-A,

Fig. 5 die Zwischenlagenstation der Be- und Entladestation in einer schematischen Queransicht im Schnitt B-B.

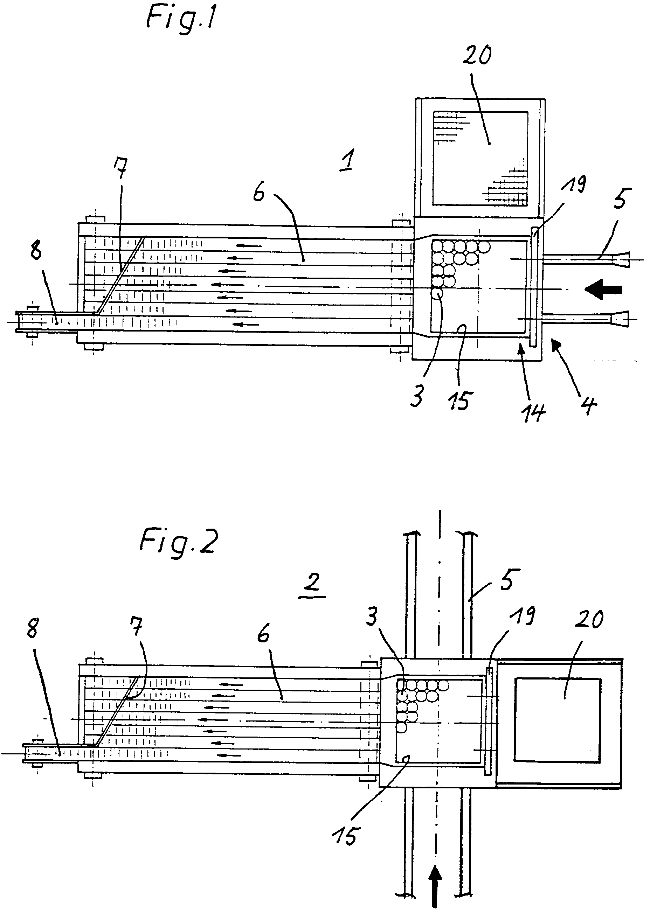

Die in Fig. 1 dargestellte Vorrichtung 1 besteht aus einer Be- und Entladestation 4, die eine Käfigwagenaufnahmekammer 15 und eine Zwischenlagenstation 20 aufweist. Einlaufseitig sind an der Käfigwagenaufnahmekammer 15 Einlaufschienen 5 angeordnet, über die ein Käfigwagen 10 in die Käfigwagenaufnahmekammer 15 hineingeschoben werden kann. Jeder Käfigwagen 10 besteht aus einem mit einem Untergestell 12 durch Verriegelungselemente lösbar verbundenen Käfig 11. Die Untergestelle 12 weisen Räder 13 auf, mittels denen der jeweilige Käfigwagen 10 auf der Käfigwagenaufnahmekammer 15 zugeordneten Einlaufschienen 5 rollend führbar ist. Die Käfigwagenaufnahmekammer 15 ist mit einer als Fördereinrichtung ausgebildeten Pufferstrecke 6 verbunden, an deren freiem Endabschnitt ein Führungsblech 7 vorgesehen ist, durch das auf der Pufferstrecke 6 befindliche Gebinde 3 einem Förderer 8 zugeführt werden. Der Förderer 8 dient bei der Entladung als Abführförderer und bei der Beladung als Zuführförderer. Es ist auch möglich und in vielen Einsatzfällen ausreichend, die Vorrichtung 1 entweder nur als Entladevorrichtung oder nur als Beladevorrichtung auszubilden.

Fig. 2 zeigt eine Vorrichtung 2, die für einen Durchlaufbetrieb geeignet ist. Bei der Vorrichtung 2 ist die Zwischenlagenstation 20 entgegengesetzt zur Pufferstrecke 6 an der Käfigwagenaufnahmekammer 15 angeordnet. Senkrecht zur Förderrichtung der Pufferstrecke 6 sind durch die Käfigwagenaufnahmekammer 15 zwei Einlaufschienen 5 geführt. Bei dieser Ausbildung der Vorrichtung 2 kann beim Austritt eines Käfigwagens 10 aus der Käfigwagenaufnahmekammer 15 eingangsseitig bereits ein neuer mit Gebinden 3 gefüllter Käfigwagen 10 in die Käfigwagenaufnahmekammer 15 eingeführt werden. Der eingangsseitige und ausgangsseitige Strang der Einlaufschienen 5 bildet hierbei eine Pufferstrecke für die Käfigwagenaufnahmekammer 15.

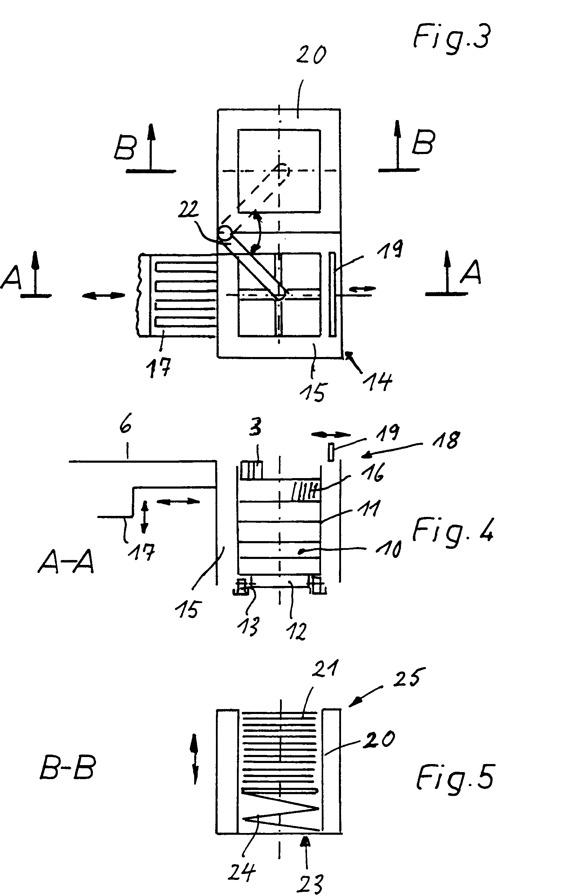

An der einen Seite der Käfigwagenaufnahmekammer 15 ist eine Hubgabel 17 angeordnet, die vertikal und horizontal verfahrbar ist. Die Hubgabel 17 dient zur Aufnahme jeweils einer etagenseitigen Gebindeanordnung 16. An dem oberen Endabschnitt 18 der Käfigwagenaufnahmekammer 15 ist ein Abschieber 19 vorgesehen, mittels dem jeweils eine Gebindeanordnung 16 von der jeweils oberen Zwischenlage 21 auf die Pufferstrecke 6 verschoben werden kann (Fig. 4). Statt eines Abschiebers 19 kann auch ein Greifer vorgesehen werden, der zur etagenweisen Aufnahme oder Abgabe von Gebinden 3 dient. Neben der Käfigwagenkammer 15 ist eine Zwischenlagenstation 20 angeordnet, die zur Ablage von aus dem Käfigwagen 10 entnommenen Zwischenlagen 21 dient. Hierzu wird eine schwenkbare Greiferanordnung 22 verwendet, die an der Be- und Entladestation 4 angeordnet ist (Fig. 3).

In der Zwischenlagenstation 20 werden die Zwischenlagen 21 auf einer vertikal verfahrbaren Hubanordnung 23 abgelegt. Diese Hubanordnung kann eine Hubschere 24 sein (Fig. 5). Die Hubanordnung 23 kann auch als Hubtisch ausgebildet sein, der z. B. mittels einer hydraulischen, pneumatischen oder elektromotorisch betriebenen Stelleinrichtung vertikal verschieblich ist. Die Zwischenlagenstation 20 ist mit der Käfigwagenaufnahmekammer 15 indirekt gekoppelt, wobei die Hubanordnung 23 sich unbeladen am oberen Endabschnitt 25 der Zwischenlagenstation 20 und beladen im unteren Abschnitt der Zwischenlagenstation 20 befindet.

Die Hubgabel 17, der Abschieber 19, die Greiferanordnung 22 und die Hubanordnung 23 werden taktweise mit z. B. hydraulischen und/oder pneumatischen und/oder elektrischen Antriebseinrichtungen bewegt. Zur

2

Steuerung wird eine besondere nicht näher dargestellte Steuereinrichtung vorgesehen, die mit einem Einfahrschalter verbunden ist. Der Einfahrschalter befindet sich in der Käfigwagenaufnahmekammer 15 und reagiert auf das Einrollen oder Ausrollen eines Käfigwagens 10. Beim Einrollen eines Käfigwagens 10 in die Käfigwagenaufnahmekammer 15 wird der Käfigwagen 10 durch Meßwertübertragung des Einfahrschalters in der Käfigwagenaufnahmekammer 15 verriegelt. Danach werden mittels der Steuereinrichtung die Hubkabel 17, der Abschieber 19, die Greiferanordnung 22 und die Hubanordnung 23 taktweise betätigt bis alle etagenseitigen Gebindeanordnungen 16 aus dem jeweiligen Käfig 11 mittels des Abschiebers 19 auf die Pufferstrecke 6 abgeschoben sind. Nach dem Abschieben einer etagenseitigen Gebindeanordnung 16 wird die unter dieser befindliche Zwischenlage 21 jeweils mittels der Greiferanordnung 22 in die Zwischenlagenstation 20 gefördert. Nach dem Abräumen der letzten etagenseitigen Gebindeanordnung 16 und dem Erreichen der oberen Endstellung durch die Hubgabel 17 fährt die Hubgabel 17 selbsttätig in die untere Endlage zurück und der Käfigwagen 10 wird entriegelt. Hiernach kann der Käfigwagen 10 aus der Käfigwagenaufnahmekammer 15 herausgeführt werden. Der Einsatz der Vorrichtungen 1, 2 zum Beladen von Käfigen 11 erfolgt sinngemäß umgekehrt wir oben zum Entladevorgang beschrieben.

## Patentansprüche

1. Vorrichtung zum Be- oder Entladen von etagenweise mit Gebinden od. dgl. befüllbaren auf Untergestellen rollbaren mindestens oben offenen Käfigen, deren Be- und Entladestation eine Hubeinrichtung aufweist und über eine Pufferstrecke mit einem Förderer verbunden ist, dadurch gekennzeichnet, daß die Be- und Entladestation (4) eine Be- und Entladeeinrichtung (14) mit einer Käfigwagenaufnahmekammer (15) aufweist, an deren einer Seite eine horizontal in den Käfigen (11) und vertikal mit einer etagenseitigen Gebindeanordnung (16) verfahrbare Hubgabel (17) und an deren oberem Endabschnitt (18) in der Ebene der Pufferstrecke (6) ein horizontal über die Käfigwagenaufnahmekammer (15) in Richtung zur Pufferstrecke (6) und zurück verfahrbarer Abschieber (19) angeordnet ist.

2. Vorrichtung zum Be- oder Entladen von etagenweise mit Gebinden od. dgl. befüllbaren auf Untergestellen rollbaren oben offenen Käfigen, deren Be- und Entladestation eine Hubeinrichtung aufweist und über eine Pufferstrecke mit einem Förderer verbunden ist, dadurch gekennzeichnet, daß die Be- und Entladestation (4) eine Be- und Entladeeinrichtung (14) mit einer Käfigwagenaufnahmekammer (15) aufweist, an deren einer Seite eine horizontal in den Käfigen (11) und vertikal mit einer etagenseitigen Gebindeanordnung (16) verfahrbare Hubgabel (17) und an deren oberen Endabschnitt (18) ein Greifer zur etagenweisen Aufnahme oder Abgabe von Gebinden (3) angeordnet ist.

3. Vorrichtung nach Anspruch 1 oder 2, dadurch gekennzeichnet, daß neben der Käfigwagenkammer (15) eine Zwischenlagenstation (20) zur Ablage von zwischen den etagenweise ausgerichteten Gebindeanordnungen (16) des jeweiligen Käfigs (11) eingelegten Zwischenlagen (21) angeordnet ist.

4. Vorrichtung nach Anspruch 3, dadurch gekennzeichnet, daß an der Be- und Entladestation (4) eine schwenkbare Greiferanordnung (22) zur Aufnahme von Zwischenlagen (21) in dem Käfigwagen (10) und zur Ablage der Zwischenlagen (21) in die Zwischenlagenstation (20) ausgebildet ist.

5. Vorrichtung nach Anspruch 3 und 4, dadurch gekennzeichnet, daß die Zwischenlagen (21) in der Zwischenlagenstation (20) auf einer vertikal verfahrbaren Hubanordnung (23) abgelegt sind.

6. Vorrichtung nach Anspruch 1, 3 bis 4, dadurch gekennzeichnet, daß die Hubgabel (17), der Abschieber (19), die Greiferanordnung (22) und die Hubanordnung (23) taktweise mittels hydraulischer und/oder pneumatischer und/oder elektrischer Antriebseinrichtungen betätigbar sind.

7. Vorrichtung nach Anspruch 6, dadurch gekennzeichnet, daß in der Käfigwagenaufnahmekammer (15) ein Einfahrschalter angeordnet ist, der mit einer Steuereinrichtung verbunden ist, mittels der bei in die Käfigwagenaufnahmekammer (15) eingefahrenem Käfig (11) dieser in der Käfigwagenaufnahmekammer (15) verriegelt wird und die Hubgabel (17), der Abschieber (19), die Greiferanordnung (22) und die Hubanordnung (23) taktweise betätigbar sind.

8. Vorrichtung nach Anspruch 5, dadurch gekennzeichnet, daß die Hubanordnung (23) als Hubschere (24) ausgebildet ist.

EP 0 514 676 A2

9. Vorrichtung nach Anspruch 5, dadurch gekennzeichnet, daß die Hubanordnung (23) als Hubtisch ausgebildet ist, der mit einer hydraulisch, pneumatisch oder elektromotorisch antreibbaren Stelleinrichtung verbunden ist.

10. Vorrichtung nach Anspruch 1 bis 9, dadurch gekennzeichnet, daß die Zwischenlagenstation (20) entgegensetzt zur Pufferstrecke (6) an der Käfigwagenaufnahmekammer (15) angeordnet ist, und daß senkrecht zur Pufferstrecke (6) durch die Käfigwagenaufnahmestation (15) zwei Einlaufschienen (5) geführt sind.

Fig.1

Fig.2

Fig.3

20

B↑    B↑

22

19↗

A↑    ↔    →    ↑A

17    15    14↙

6    3    ↔    19↗    18↗
16
17↕    ↔    11
A-A    10    Fig. 4
15    13    12

21    25↙
B-B    20
↕    Fig.5
24    23↑